# EUROPEAN PATENT APPLICATION

(11) **EP 1 365 331 A2**
(43) Date of publication of application: **26.11.2003**
(21) Application number: 03076553.1
(22) Date of filing: 15.05.2003
(51) Int. Cl.: G06F 17/30

(54) **Determination of a semantic snapshot**

(30) Priority: 24.05.2002 NL 1020670
(71) Applicant: Océ-Technologies B.V., 5914 CC Venlo (NL)
(72) Inventor: van den Tillaart, Robertus C.W.T.M., 5422 BJ Gemert (NL)
(74) Representative: van Meeteren, Arend Anthonie

(57) **Abstract**

A method and apparatus for characterising a document are described, particularly for the recognition, organisation or relating of documents, for which purpose a series of statistical properties of the text in the document is determined. A list of words occurring in the document is determined and a frequency of occurrence is determined for each word in the list. The series is then built up of pairs respectively of one word from the list and the frequency of that word, the series forming a semantic snapshot of the document. The semantic snapshot is used for comparing documents with one another or for comparing with a semantic snapshot of a specific area of attention or subject, so that the relevance of the document to that subject is determined.

## Description

The invention relates to a method of characterising a document, particularly for the recognition, organisation or relating of documents, wherein a series of statistical properties of the text in the document is determined.

The invention also relates to a computer program product for characterising a document, and to a data signal.

The invention also relates to apparatus for processing documents, which apparatus comprises a module for characterising a document by means of a series of statistical properties of the text of the document, particularly for the recognition, organisation or relating of documents.

US-A 5 418 951 describes a method of identifying, retrieving or sorting documents by language or subject. To this end, a series of n-grams is determined for each document, an n-gram being a combination of n letters or spaces. The frequency of each n-gram is determined, i.e., how often the n-gram occurs in the document. The series of n-grams and frequencies is processed further by standardising the frequency and removing a common component. On the basis of the series of n-grams the language is determined in which the document was (probably) written, by comparing with known series from documents in that language. Also, a possible relationship of an unknown document to known documents in a database may be determined by comparing the series of n-grams.

One problem with the known system is that the characterising of documents on the basis of the series of n-grams has only a limited distinctive power.

The object of the invention inter alia is to provide a system with which a better distinction can be made between documents.

According to a first aspect of the invention, a method according to the preamble is characterised in that a list of words occurring in the document is determined and in that a frequency of occurrence is determined for each word in the list, and in that the series is built up of pairs respectively of one word from the list and the frequency of that word, the series forming a semantic snapshot of the document.

According to a second aspect of the invention, an arrangement of the type referred to in the opening paragraph is characterised in that the module is adapted to determine a list of words occurring in the document, and to determine a frequency of occurrence for each word in the list, and to build up the series from pairs of respectively one word from the list and the frequency of that word, the series forming a semantic snapshot of the document. The steps according to the invention have, inter alia, the advantage that the semantic snapshot is related to the content and subject of the document. Moreover, in the case of highly similar documents, such as adapted versions of one and the same document, there is a very distinct correspondence between the semantic snapshots. In this way it is possible automatically to obtain clustering and order of large quantities of documents based on the semantic snapshot.

The invention is also based on the realisation that the human language can be approached at different levels by automated analyses. The statistical approach in US-A 5 418 951 is based on an analysis of the occurrence of letter combinations. The analysis provides an indication as to the language and type of document. The inventor has realised that an automated statistical analysis on the higher semantic level of whole words intended in principle for the human reader is possible, and even gives a much better indicator. This indicator, the so-called semantic snapshot, has been found to be very suitable both for relating different documents by subject, and for putting closely related documents in order.

In one embodiment of the method according to the invention, the list of words is processed by omitting words shorter than a predetermined length. This has the effect that short words which occur frequently and give little information as to the nature of the document, are omitted from the semantic snapshot. This increases the distinctive power of the semantic snapshot.

In another embodiment of the method according to the invention, the list of words is processed by sorting by at least one of the following criteria: sequence of occurrence, alphabetical sequence, sequence of word length, sequence of frequency. Inter alia, this has the advantage that the comparison with other semantic snapshots becomes simpler. Particularly in the case of sorting by decreasing word length, it has been found that the long words provide a good characterisation of the document. Furthermore, in the case of sorting by increasing frequency, it has been found that the low frequencies give a good characterisation of the document.

In further embodiments of the method according to the invention, the list of words is processed by combining or replacing words based on correcting incorrectly or differently spelt words, on reduction of verbs or nouns to a basic form, on recognition of homonyms, or synonyms, and/or on a database of technical terms, or else the list of words is processed by translating words into another language. This has the advantage that differences between words which do no give any semantic distinction, are eliminated. In this way the distinctive power of the semantic snapshot is increased.

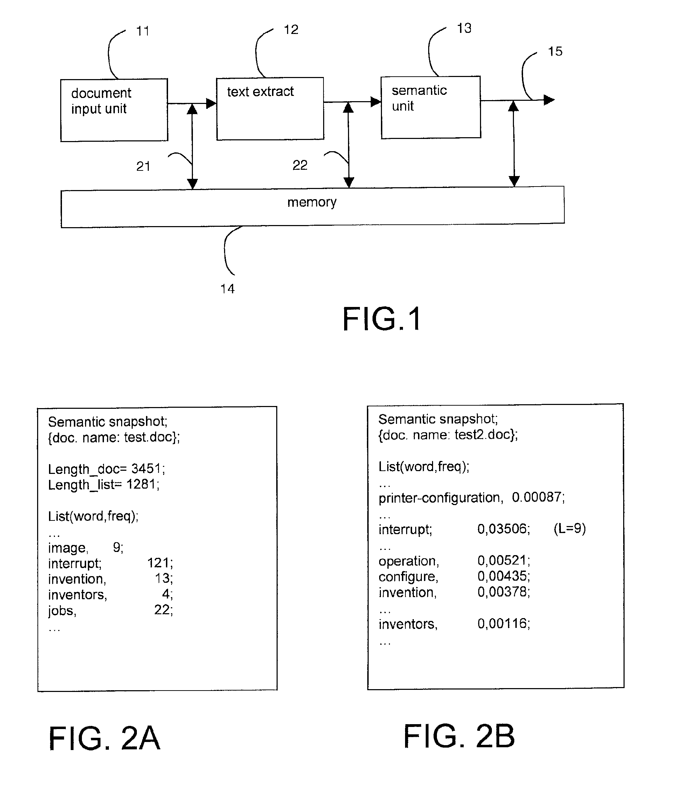

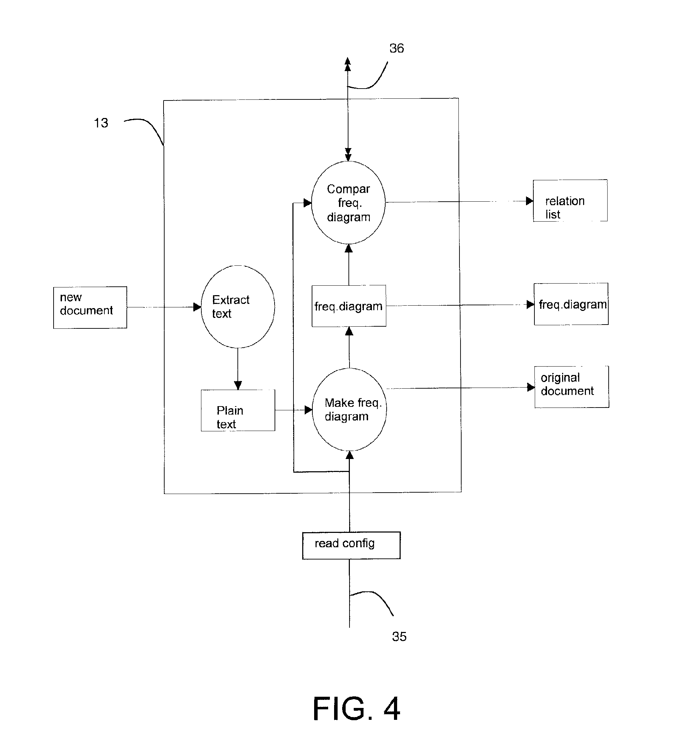

The invention will be explained in detail hereinafter with reference to Figs. 1 and 4 wherein:
Fig. 1 shows an arrangement for determining a semantic snapshot.
Figs. 2a and 2b illustrate a semantic snapshot.
Figs. 3 shows an architecture for the compilation of a database based on semantic snapshots and
Fig. 4 illustrates a module for determining a semantic snapshot.

In the Figures, corresponding elements have the same reference numbers.

Fig. 1 shows an apparatus for determining a semantic snapshot. The apparatus comprises a document input unit 11 for inputting documents in electronic form, for example a disk drive for reading document files from a data support such as a floppy disk or CD. The input unit 11 is coupled to a text extraction unit 12 in which the text present in the document is collected. In the process the text is deprived of layout and form characteristics, such as the font. The result is a plain text version of the document. The output of the text extraction unit 12 is coupled to a semantic unit 13 which determines a series of statistical properties of the text in the document. First, a list of words occurring in the document is determined. A frequency of occurrence is determined for each word in the constructed list by counting the number of times that the word occurs in the text. The word and the frequency together form a pair, referred to as a {word, freq}tuple. Finally, the statistical series is built up from such pairs of respectively one word from the list and the frequency of that word. The series thus forms a semantic snapshot of the document. A semantic snapshot is a frequency spectrum diagram of the words.

In a subsequent step the semantic snapshot is used for comparing documents with one another or for comparing with a semantic snapshot of a specific area of attention or subject, so that the relevance of the document for that subject is determined. If both the word list and the frequency diagram of different documents exhibit considerable conformity, then there is a fair chance that the documents are variations of one another. They will (at least) be related in content. With the semantic snapshot it is possible to form associations between different documents or between different versions of one and the same document. In the latter case, the frequency diagrams will be very similar to one another, certainly if only minor amendments or additions are concerned.

In one embodiment, the list is restricted to words longer than a specific length. As a result, short words having little relevance semantically fall outside the semantic snapshot. Longer words that occur frequently can also be omitted for a better semantic distinctive effect, for example "having" or "being".

In various embodiments the semantic unit 13 is arranged for processing the text and/or the list of words and/or the semantic snapshot in the manners described hereinafter. The semantic snapshot is based on the plain text of a document. The quality of the semantic snapshot can be improved by the following techniques. Firstly, different words can be combined or replaced on the basis of semantic relationship. Suitable possibilities are reduction of verbs and/or nouns to their basic form. The combining step can also be formed by recognizing homonyms or synonyms or by making use of technical term databases. A semantic snapshot contains a word list and the frequencies of occurrence for each word. The {word, freq}tuples can be sorted in a predetermined manner. Suitable manners are chronological, namely by the first occurrence of a word in the text, or alphabetically (case sensitive or otherwise). One manner which has good distinctive power is sorting by word length (for example long words first, these are rarer), or by frequency, rising or falling (low frequencies discriminate better). Different sorting criteria can also be combined, for example first by length and then words of the same length by frequency. Semantic snapshots can be processed or compared with one another more efficiently by these different sorting operations. Another possibility is translating the words in a semantic snapshot, for example from English to Dutch. In this way, documents in different languages can be related. This is a specific advantage of semantic snapshots of documents.

In one embodiment the semantic snapshot is complemented by the use of known recognisable semantic structures such as author, department, subject, etc. In the case of documents in an existing database, these data can often be derived by the fact that they are stored separately in combination with the document. It is also possible to add previously allocated keywords or other characteristics to the semantic snapshot, or they can be used to control the processing of the word list, e.g. by the use of a relevant database of technical terms and conventional synonyms in that technical area.

In one embodiment, the frequency of occurrence is converted by standardisation. In principle, the frequency is a whole number that indicates the absolute number, but it can be normalized by division by the total number of words. In this normalization, information concerning the length of the document is lost. For most types of comparison this does not have an adverse effect. The length of the document can also be added separately as a parameter to the semantic snapshot.

Fig. 2a shows a first example of a semantic snapshot. This is a data structure containing a series of word + frequency pairs, indicated here by 'List(word, freq)'. The list is sorted by alphabetical order. In this example, the following elements have also been added: the name of the original document '{doc.Name:test.doc}', the length of the document 'Length_doc', and the length of the word list 'Length_list'.

Fig. 2b shows a second example of a semantic snapshot. The semantic snapshot has now been sorted by length of words, and then by frequency. In the list, a very long word is shown with length 21, and some words with length L=9 are shown. The values for the frequencies are given in percentages by normalization with the length of the document. The semantic snapshot can be kept on a data support with the document, for example on a hard disk or CD-R. If the document is adapted and given a new date, then a semantic snapshot has to be re-determined. It is also possible to store or send the semantic snapshot as a separate data signal, for example via the Internet. In this way a receiver can on the basis of a limited quantity of data determine whether a relevant document is present at the source. It is also possible to limit the quantity of data for the semantic snapshot by using a predetermined "dictionary" of words, and allocating each word therein a code, for example a serial number. The semantic snapshot then consists of a list of pairs of respectively a word code and the frequency. If required, word codes can be used for just part of the list, while words occurring less frequently are completely included in the semantic snapshot.

The semantic snapshot can be used in many areas. For example, many reports are collected in a database. These reports are coded by hand by expensive professionals. The object of these encodings was to group related reports. With the semantic snapshot related documents can automatically be clustered together. Another case is plagiarism. A semantic snapshot is made of books, web documents or other documents. If these resemble one another greatly, there may be a case of plagiarism.
If they clearly do not resemble one another then there is no case of plagiarism. Also, a frequently occurring problem is version management, i.e., possibly different versions of unknown sequence may exist of a document. By determining the semantic snapshot of the documents and their mutual distances, or alternatively the distance from the average document, it is possible to estimate what the version sequence of the documents was. In this connection a document in handwritten form can also be recognised as an equivalent of the same document in the typed form.

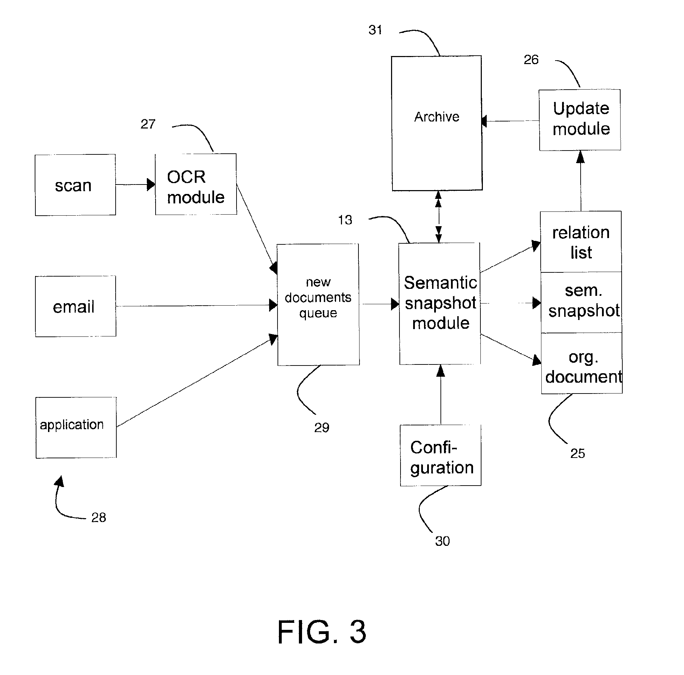

Fig. 3 shows an architecture for building up a database on the basis of semantic snapshots. Firstly, document sources 28 are indicated with modules such as 'application', wherein an application program delivers a document, or alternatively e-mail, or alternatively a scanner for optically scanning a document on paper. If the document is supplied in bitmap form, as is the case by a scanner, the document is routed to an OCR module 27 (Optical Character Recognition) for conversion to readable text. All the incoming documents are stored (temporarily) in a memory 29 in which the 'new documents queue' is present. Each document is then routed to a semantic snapshot module 13 in which the semantic snapshot is determined, for example as described above in connection with Fig. 1. The configuration is used in determining the semantic snapshot, such as the sorting sequence or the synonyms used, are fixed in a configuration unit 30 coupled to the semantic unit 13. After the semantic snapshot has been determined it can be stored in a database memory 25, in which, for example, the original document (or a reference thereto), the calculated semantics snapshot and a possible list with relationships to other documents are stored, for example in separate sections. The semantic module 13 is also coupled to the archive 31, in which the data from other documents are stored for comparison with the current document. The archive is regularly updated with the newly processed documents via an update module 26. In the updating process, the relation list of the new document is read and the semantic snapshot, and the other relationships in the archive are adapted thereto. One practical implementation of the described architecture is a digital copier and/or scanner coupled to a computer system, e.g. via a local area network. In the computer system, the database and the archive of documents present in a company are maintained. If a document is entered for copying or scanning in the machine, a bitmap is prepared and (after an OCR intermediate step) the text is extracted therefrom. The semantic snapshot is then calculated. The module for this function can be incorporated in the digital copier and/or scanner, or else this function can be performed by a software program in the computer.

Fig. 4 shows a module for determining a semantic snapshot. This module corresponds to the semantic unit 13 in Fig. 3. It is constructed as a processor with instructions for the operations indicated hereinafter, for example a standard computer with a software program or a specifically (partly hard-) programmed processor. The action of the module is as follows. In a first "extract text" step, the plain text is isolated from a new document. In a second 'make freq. diagram' step, a word list and the associated frequencies are determined. The parameters used in this step are set via the 'read config' input 35. These parameters relate, for example, to the minimum word length, a limitation of the frequency, or options such as translation or the use of specific lists with synonyms or technical terms. As a result after calculation the semantic snapshot is available via the 'freq. diagram' output and the original document and/or the plain text version is available via the 'original document' output. The plain text is only required temporarily and if necessary can be re-extracted from the original document.

In one embodiment, the semantic module 13 is provided with a third step 'compare freq.diagrams' for comparing the semantic snapshot of the new document and the known semantic snapshots. To this end, the semantic module 13 is provided with a data bus 36 for reading in known semantic snapshots. As a result of the comparison a list of relations with other documents or known subjects is available via the 'relation list' output. In the comparison, the corresponding words in the two semantic snapshots are first determined and then the associated frequencies are compared. The differences or correspondences in frequency found can be allocated a weighting, for example in dependence on the location in the sorted list. In this way a relationship index is calculated for the entire document.

Although the invention has been described hereinbefore with reference to a number of exemplified embodiments, the invention is not limited thereto. The invention comprises any new characteristic or combination of characteristics indicated hereinbefore. For example, the invention can also be constructed as a unit for determining the semantic snapshot of documents already present in a storage system or already having a convenient characterisation. The semantic snapshot can then be used to apply a more detailed clustering. It should also be noted that the word "comprise" does not preclude the presence of elements or steps other than those mentioned, that the word "one" does not exclude a plurality, that the reference numbers do not limit the claims, that the invention can be performed both (partly) in hardware and (partly) in software, and that different means or functions can be embodied by the same hardware or software element.

## Claims

1. A method of **characterising** a document, particularly for the recognition, organisation or relating of documents, wherein a series of statistical properties of the text in the document is determined, **characterised in that**
- a list of words occurring in the document is determined and **in that**
- a frequency of occurrence is determined for each word in the list, and **in that**
- the series is built up of pairs respectively of one word from the list and the frequency of that word, the series forming a semantic snapshot of the document.

2. A method according to claim 1, wherein the list of words is processed by omitting words shorter than a predetermined length.

3. A method according to claim 1 or 2, wherein the list of words is processed by sorting by at least one of the following criteria: sequence of occurrence, alphabetical sequence, sequence of word length, sequence of frequency.

4. A method according to claim 1, 2 or 3, wherein the list of words is processed by combining or replacing words based on correcting incorrectly or differently spelt words, on reduction of verbs or nouns to a basic form, on recognition of homonyms or synonyms, and/or on a database of technical terms.

5. A method according to claim 1, 2, 3 or 4, wherein the list of words is processed by translating words into another language.

6. A method according to claim 1, 2, 3, 4 or 5, wherein the semantic snapshot is processed by normalising the frequencies in the series of pairs.

7. A method according to claim 1, 2, 3, 4, 5 or 6, wherein the semantic snapshot is processed by adding data concerning the semantic structure, such as author, department, keywords and/or subject.

8. A method according to any one of the preceding claims, wherein a relationship is determined between the document and other documents by comparing the semantic snapshots, particularly for grouping related documents by subject or arranging closely related documents, such as versions of the same document.

9. A method according to any one of the preceding claims, wherein a relationship is determined between the document and a specific subject by comparing the semantic snapshot of the document and a semantic snapshot specific to the subject and determined on the basis of a set of known documents and/or a list of words relating to the subject.

10. A computer program product for **characterising** a document, which program is adapted to perform on a processor the method according to any one of the preceding claims.

11. A data signal, **characterised in that** the signal represents a data structure of a semantic snapshot as formed by the method according to any one of the preceding claims.

12. A data signal according to claim 11, wherein the signal is stored on a data support.

13. Apparatus for processing documents, which apparatus comprises a module for **characterising** a document by means of a series of statistical properties of the text of the document, particularly for the recognition, organisation or relating of documents, **characterised in that** the module is adapted to determine a list of words occurring in the document, and to determine a frequency of occurrence for each word in the list, and to build up the series from pairs of respectively one word from the list and the frequency of that word, the series forming a semantic snapshot of the document.

14. Apparatus according to claim 13, wherein the apparatus is provided with a document input unit, which document input unit is adapted to extract the text.

15. Apparatus according to claim 13 or 14, wherein the module is adapted to perform the method according to any one of claims 2 to 9.
